# EUROPEAN PATENT SPECIFICATION

(11) **EP 3 812 046 B1**
(45) Date of publication and mention of the grant of the patent: **09.11.2022**
(21) Application number: 18923217.6
(22) Date of filing: 22.06.2018
(51) Int. Cl.: B02C 15/04, B02C 21/00, B02C 23/12, B02C 23/22, B02C 15/00

(54) **GRINDING SYSTEM**
MAHLSYSTEM
SYSTÈME DE BROYAGE

(43) Date of publication of application: 28.04.2021
(73) Proprietor: Kawasaki Jukogyo Kabushiki Kaisha, Hyogo 650-8670 (JP)
(72) Inventor: ANDO, Fuminori, Hyogo 650-8670 (JP); TOKIOKA, Nobuo, Hyogo 650-8670 (JP); ENDO, Akira, Hyogo 650-8670 (JP); NAKAI, Takanobu, Hyogo 650-8670 (JP)
(74) Representative: Leinweber & Zimmermann
(86) International application number: PCT/JP2018/023888
(87) International publication number: WO 2019/244357

(56) References cited:
- JP-A- H0 631 188
- JP-A- H0 788 389
- JP-A- S6 344 949
- JP-A- H05 269 395
- JP-A- H09 117 685
- JP-A- H09 117 685
- JP-A- H10 230 179
- JP-A- 2001 046 897
- JP-A- 2001 046 897
- JP-U- H0 212 448
- US-A- 6 019 299
- US-A1- 2013 048 767

## Description

### Technical Field

The present invention relates to a grinding system including a vertical roller mill.

### Background Art

A vertical roller mill has been known as one of grinders which dry and grind various raw materials, such as cement raw materials and calcium carbonates. PTL 1 discloses a grinding system including this type of vertical roller mill.

In the grinding system (grinding apparatus) of PTL 1, the raw materials, such as cement clinker, are supplied to and ground in the vertical roller mill. The vertical roller mill includes: a housing; a rotating table accommodated in the housing; a plurality of grinding rollers pressed against the rotating table to be rotated; and a separator provided in the vicinity of a gas discharge port of an upper portion of the housing. A hot air outlet is provided around an outer periphery of the rotating table. Coarse powder in ground materials of the vertical roller mill falls from the rotating table, is discharged once from the vertical roller mill, is supplied to the vertical roller mill again together with the raw materials, and is ground. On the other hand, fine powder having smaller particle diameter than the coarse powder in the ground materials of the vertical roller mill passes through a classifier together with a gas flowing upward in the vertical roller mill to be classified into refined powder and the other powder. The refined powder is discharged from the vertical roller mill together with the gas, is collected by a powder collector, is subjected to secondary grinding, and is recovered as a product. The gas separated from the refined powder by the powder collector flows out from a suction fan provided downstream of the powder collector and is again supplied to the vertical roller mill as hot air.

### Citation List

### Patent Literature

PTL 1: Japanese Laid-Open Patent Application Publication No. 9-117685
PTL2: JP2001046897A discloses the preamble of claim 1.

### Summary of Invention

### Technical Problem

In the vertical roller mill, the raw materials are dried by the hot air blowing from the periphery of the rotating table to a grinding chamber where grinding is performed. It is desirable that when the raw materials to be ground contains a large amount of moisture, the temperature of the ground materials be increased to a high temperature, such as about 120°C, in order to dry the raw materials such that the amount of moisture contained in the raw materials becomes an amount appropriate for the grinding. On the other hand, it is desirable that the gas discharged from the vertical roller mill together with the fine powder have a lower temperature such that the temperature of the refined powder recovered as the product is suppressed to an easy-to-handle temperature.

However, in the grinding system of PTL 1, the temperature of the gas discharged from the vertical roller mill together with the fine powder depends on the temperature of the grinding chamber. Therefore, when the temperature of the grinding chamber increases, the temperature of the gas discharged from the grinding chamber increases, and as a result, the temperature of the product (refined powder) also increases.

The present invention was made under these circumstances, and an object of the present invention is to provide a technique of being able to independently adjust the temperature of ground materials ground by a vertical roller mill included in a closed-circuit grinding system and the temperature of a product.

### Solution to Problem

A grinding system according to one aspect of the present invention includes: a vertical roller mill including a rotating table, a grinding roller, and a housing, wherein raw materials are ground by the rotating table and the grinding roller in a grinding chamber formed in the housing while being dried by hot air, ground materials are discharged from a discharge port located lower than the rotating table, and gas containing fine powder generated by the grinding is discharged from a gas discharge port located higher than the rotating table; a ground material circulation system including a ground material circulation passage through which the ground materials discharged from the vertical roller mill move from the discharge port of the vertical roller mill to a supply port and a classifier provided at the ground material circulation passage and configured to classify the ground materials and separate refined powder from the ground materials; and a gas circulation system including a gas circulation passage through which the gas discharged from the vertical roller mill flows from the gas discharge port of the vertical roller mill to a hot air inlet, a powder collector provided at the gas circulation passage and configured to separate the fine powder from the gas, and a fan configured to suck the gas into the gas circulation passage, wherein the gas circulation system is independent from the ground material circulation system.

According to the grinding system configured as above, by the ground material circulation system, the refined powder is separated from the ground materials discharged from the vertical roller mill, and the ground materials from which the refined powder has been separated return to the vertical roller mill. Moreover, in the grinding system, by the gas circulation system, the fine powder is separated from the gas discharged from the vertical roller mill, and the gas from which the fine powder has been separated returns to the vertical roller mill as the hot air. As above, in the grinding system, the gas circulation system by which the hot air is supplied to the grinding chamber of the vertical roller mill and the ground material circulation system by which the refined powder as the product is separated from the ground materials ground in the grinding chamber are independent from each other. Therefore, the ground materials moving in the ground material circulation system or the refined powder (product) separated from the ground materials can be cooled without influencing the temperature of the gas in the gas circulation system. To be specific, the temperature of the ground materials of the vertical roller mill and the temperature of the product can be adjusted independently.

In the above grinding system, a collector configured to collect the refined powder separated from the ground materials may be connected to the classifier.

With this, the refined powder classified by the classifier can be collected and recovered.

The grinding system configured as above may further include a conveyance passage through which the fine powder collected by the powder collector is supplied to the ground material circulation passage.

With this, the fine powder contained in the discharge gas of the vertical roller mill can be processed in the same manner as the ground materials discharged from the vertical roller mill.

The grinding system configured as above may further include a passage through which the gas is supplied to the classifier from a portion of the gas circulation passage which portion is located downstream of the powder collector in a flow direction of the gas.

With this, the flow rate of the gas discharged from the vertical roller mill to the gas circulation passage and the flow rate of the gas which returns to the vertical roller mill can be balanced.

In the grinding system configured as above, the classifier may include a cooler configured to supply cool air into the classifier.

With this, the refined powder classified by the classifier can be effectively cooled.

### Advantageous Effects of Invention

The present invention can provide a technique of being able to independently adjust the temperature of the ground materials of the vertical roller mill included in the closed-circuit grinding system and the temperature of the refined powder (product).

### Brief Description of Drawings

FIG. 1 is a diagram showing an entire configuration of a grinding system according to one embodiment of the present invention.
FIG. 2 is a diagram showing an entire configuration of the grinding system according to Modified Example 1.

### Description of Embodiments

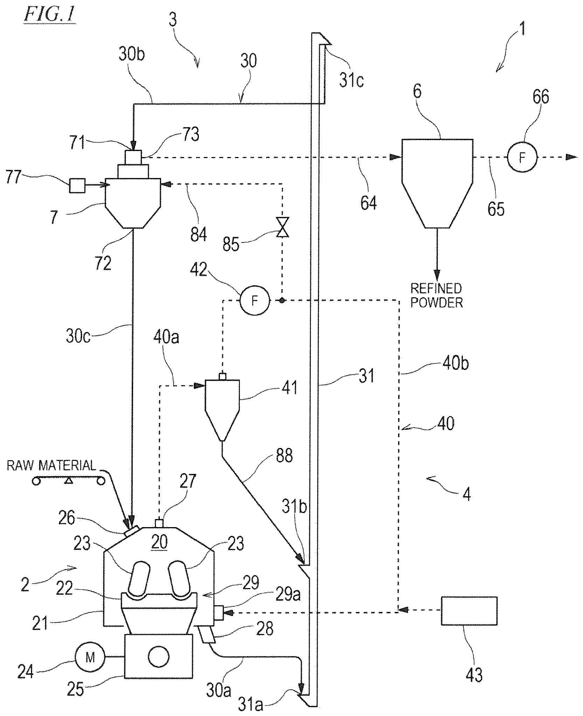

Next, an embodiment of the present invention will be described with reference to the drawings. FIG. 1 is a diagram showing an entire configuration of a grinding system 1 according to one embodiment of the present invention.

The grinding system 1 shown in FIG. 1 includes a vertical roller mill 2, a ground material circulation system 3 connected to the vertical roller mill 2, and a gas circulation system 4 connected to the vertical roller mill 2.

### Vertical Roller Mill 2

The vertical roller mill 2 does not include a separator. The vertical roller mill 2 includes: a housing 21; a rotating table 22 configured to rotate about a vertical rotation axis; a plurality of grinding rollers 23 pressed against the rotating table 22 by a pressurizer (not shown) to be rotated; a motor 24 as a rotation driving source of the rotating table 22; and a speed reducer 25 configured to transmit rotational power of the motor 24 to the rotating table 22.

A grinding chamber 20 where raw materials are ground is formed in the housing 21. A supply port 26 (supply chute) through which the raw materials are introduced to an upper surface of the rotating table 22 is provided at an upper portion of the housing 21. Moreover, a gas discharge port 27 through which fine powder generated by grinding the raw materials is discharged from the grinding chamber 20 together with a gas is provided at an upper portion of the housing 21 and above the rotating table 22.

A discharge port 28 (discharge chute) through which ground materials having fallen from an outer peripheral edge of the rotating table 22 are discharged to an outside of the vertical roller mill 2 is provided under the rotating table 22. Moreover, a hot air outlet 29 through which hot air blows upward into the grinding chamber 20 is provided around an outer periphery of the rotating table 22.

### Ground Material Circulation System 3

The ground material circulation system 3 is configured such that: refined powder as a product is separated from the ground materials discharged from the discharge port 28 of the vertical roller mill 2; and the ground materials from which the refined powder has been separated returns to the vertical roller mill 2. The refined powder separated by the ground material circulation system 3 is recovered as the product.

The ground material circulation system 3 includes a ground material circulation passage 30 through which the ground materials discharged from the vertical roller mill 2 move from the discharge port 28 of the vertical roller mill 2 to the supply port 26. A classifier 7 is provided at the ground material circulation passage 30. The classifier 7 classifies the ground materials and separates the refined powder from the ground materials. Moreover, in the present embodiment, since a ground material inlet 71 of the classifier 7 is located higher than the discharge port 28 of the vertical roller mill 2, a bucket elevator 31 is provided at the ground material circulation passage 30 as a conveyor configured to convey the ground materials from the discharge port 28 to the ground material inlet 71.

The discharge port 28 of the vertical roller mill 2 is connected to a first inlet 31a of the bucket elevator 31 through a passage 30a. The bucket elevator 31 includes a plurality of buckets (not shown). The bucket elevator 31 conveys upward the ground materials put into the buckets through the first inlet 31a and a below-described second inlet 31b and discharges the ground materials through an outlet 31c. The outlet 31c of the bucket elevator 31 is connected to the ground material inlet 71 of the classifier 7 through a passage 30b.

A distribution damper (not shown) may be provided at the passage 30b connecting the bucket elevator 31 and the classifier 7. Then, some of the ground materials may be directly conveyed to the supply port 26 of the vertical roller mill 2 by the distribution damper without passing through the classifier 7.

The classifier 7 may classify the supplied ground materials into refined powder and coarse powder based on particle diameters. It should be noted that the particle diameter of the "refined powder" is determined in accordance with the particle diameter of the recovered product. The "coarse powder" denotes powder having a larger particle diameter than the refined powder in the ground materials supplied to the classifier 7. In the present embodiment, a pneumatic classifier is adopted as the classifier 7. It should be noted that the classifier 7 is only required to be able to classify the ground materials into the refined powder and the other powder based on the particle diameters and is not limited to the pneumatic classifier.

The classifier 7 may include a cooler 77 configured to lower the temperature of the product. The cooler 77 is, for example, a cool air supplier configured to directly supply cool air into the classifier 7. The cool air supplied into the classifier 7 is utilized as air flow for classifying the ground materials. As above, since the ground materials are directly cooled by the cool air supplied into the classifier 7, the refined powder classified by the classifier 7 can be effectively cooled. It should be noted that the cooler 77 is not limited to the above and may be, for example, a cooling jacket provided around the classifier 7.

The coarse powder in the ground materials supplied to the classifier 7 is discharged from a discharge port 72. The discharge port 72 is connected to the supply port 26 of the vertical roller mill 2 through a passage 30c.

The refined powder in the ground materials supplied to the classifier 7 is discharged from a gas discharge port 73. The gas discharge port 73 is connected to an inlet of a collector 6 through a passage 64. A first fan 66 is provided at a discharge passage 65 of the collector 6.

The collector 6 collects the refined powder flowing together with the gas discharged from the classifier 7 and separates the refined powder from the gas. In the present embodiment, a bag filter is adopted as the collector 6. It should be noted that the collector 6 is only required to be able to collect the refined powder flowing together with the gas, and is not limited to the bag filter.

### Gas Circulation System 4

The gas circulation system 4 is configured such that: the fine powder is separated from the discharge gas of the vertical roller mill 2; and the gas from which the fine powder has been separated returns to the vertical roller mill 2 as the hot air.

The gas circulation system 4 includes a gas circulation passage 40 through which the gas discharged from the vertical roller mill 2 flows from the gas discharge port 27 of the vertical roller mill 2 to a hot air inlet 29a. A powder collector 41, a second fan 42, and a hot air supply source 43 are provided at the gas circulation passage 40. The powder collector 41 separates the fine powder from the gas. The second fan 42 sucks the gas to the gas circulation passage 40. The hot air supply source 43 supplies the hot air to the gas circulation passage 40.

The gas discharge port 27 of the vertical roller mill 2 is connected to an inlet of the powder collector 41 through a passage 40a. An outlet of the powder collector 41 is connected to the hot air inlet 29a of the vertical roller mill 2 through a passage 40b. The hot air supply source 43 is connected to the passage 40b.

The powder collector 41 separates the fine powder from the gas discharged from the vertical roller mill 2 (hereinafter may be referred to as a "mill discharge gas"). In the present embodiment, a cyclone powder collector which utilizes suction action of the second fan 42 is adopted as the powder collector 41. It should be noted that the powder collector 41 is only required to be able to separate the fine powder from the mill discharge gas, and is not limited to the cyclone powder collector.

A fine powder outlet of the powder collector 41 is connected to the second inlet 31b of the bucket elevator 31 through a fine powder conveyance passage 88. The fine powder separated from the mill discharge gas by the powder collector 41 is supplied to the bucket elevator 31 through the fine powder conveyance passage 88.

A passage 84 through which the mill discharge gas of the passage 40b is supplied to the classifier 7 is connected to a portion of the passage 40b connected to the outlet of the powder collector 41, the portion being located downstream of the second fan 42 in a flow direction of the mill discharge gas. A flow regulating valve 85 is provided at the passage 84. The flow regulating valve 85 adjusts the flow rate of the mill discharge gas flowing to the classifier 7. The flow rate of the mill discharge gas flowing to the classifier 7 can be adjusted by changing an opening degree of the flow regulating valve 85. As a result, the flow rate of the mill discharge gas which returns to the vertical roller mill 2 can be adjusted.

The hot air supply source 43 may be, for example, a hot air generating furnace configured to generate hot air having a desired temperature. The hot air supplied from the hot air supply source 43 to the gas circulation passage 40 is supplied through the passage 40b to the hot air inlet 29a of the vertical roller mill 2 together with the mill discharge gas. It should be noted that the hot air supply source 43 is not limited to the hot air generating furnace. For example, when there exists a high-temperature gas generating source, such as a kiln (cement combustion furnace), around the vertical roller mill 2, the high-temperature gas generating source may be utilized as the hot air supply source 43.

One example of the operation of the grinding system 1 configured as above will be described.

In the vertical roller mill 2, the inside of the grinding chamber 20 including the rotating table 22 and the grinding rollers 23 is preheated by the hot air blowing from the hot air outlet 29. Then, the rotating table 22 is rotated by the motor 24, and the plurality of grinding rollers 23 whose peripheral surfaces are being pressed against a grinding surface (upper surface) of the rotating table 22 are rotated. The raw materials are supplied through the supply port 26 to the rotating table 22 that is rotating as above. The raw materials are crushed and ground on the rotating table 22 by the grinding rollers 23. The ground raw materials (i.e., the ground materials) fall from the peripheral edge of the rotating table 22 and are discharged to an outside of the mill through the discharge port 28. Moreover, in the ground raw materials, the fine powder flying up by the hot air blowing from the hot air outlet 29 is discharged from the gas discharge port 27.

As above, in the vertical roller mill 2, the conveyance of the ground materials does not depend only on the air flow, and the entire amount of hot air discharged from the grinding chamber 20 does not have to be supplied to the classifier 7. Therefore, as compared to an air flow conveyance-type conventional vertical roller mill, the temperature of the grinding chamber 20 can be freely adjusted by the flow rate and/or temperature of the hot air taken into the grinding chamber 20.

### Gas Circulation System 4

The mill discharge gas discharged from the gas discharge port 27 of the vertical roller mill 2 flows into the powder collector 41 by the suction action of the second fan 42. In the powder collector 41, the fine powder flowing together with the mill discharge gas is separated from the mill discharge gas. The separated fine powder is supplied through the conveyance passage 88 to the second inlet 31b of the bucket elevator 31 and joins the flow of the ground materials of the below-described ground material circulation system 3. With this, part or all of the fine powder collected by the powder collector 41 can be recovered as the refined powder that is used as the product.

On the other hand, the mill discharge gas from which the fine powder has been separated by the powder collector 41 flows out from the powder collector 41, is sucked into the second fan 42, and is supplied to the passage 40b located at a further downstream side in the gas circulation system 4. The opening degree of the flow regulating valve 85 may be adjusted such that the flow rate of the mill discharge gas flowing into the passage 40b by the suction action of the second fan 42 and the flow rate of the mill discharge gas returning to the vertical roller mill 2 are balanced. The hot air supplied from the hot air supply source 43 to the passage 40b flows into the vertical roller mill 2 together with the mill discharge gas and blows into the mill through the hot air outlet 29. The temperature and flow rate of the hot air supplied from the hot air supply source 43 may be adjusted in accordance with a mill internal temperature of the vertical roller mill 2.

### Ground Material Circulation System 3

The ground materials discharged from the vertical roller mill 2 are conveyed upward by the bucket elevator 31 and flow into the classifier 7. In the classifier 7, the ground materials are classified, and the refined powder is separated from the ground materials.

The refined powder separated from the ground materials by the classifier 7 is discharged from the gas discharge port 73 of the classifier 7 together with the gas by the suction action of the first fan 66 and is conveyed by the air flow to the collector 6 through the passage 64. In the collector 6, the refined powder is collected. The refined powder is recovered as the product and is, for example, bagged. On the other hand, the gas separated from the refined powder by the collector 6 flows out to the discharge passage 65 by the suction action of the first fan 66 to be discharged to an atmosphere.

On the other hand, the ground materials from which the refined powder has been separated by the classifier 7 is discharged from the discharge port 72 of the classifier 7, is supplied through the passage 30c to the supply port 26 of the vertical roller mill 2, and is ground by the vertical roller mill 2 again.

As described above, the grinding system 1 of the present embodiment includes the vertical roller mill 2, the ground material circulation system 3, and the gas circulation system 4. The gas circulation system 4 is independent from the ground material circulation system 3.

The vertical roller mill 2 includes the rotating table 22, the grinding rollers 23, and the housing 21. In the grinding chamber 20 formed in the housing 21, the raw materials are ground by the rotating table 22 and the grinding rollers 23 while being dried by the hot air. Then, the ground materials are discharged from the discharge port 28 located lower than the rotating table 22, and the gas containing the fine powder generated by the grinding is discharged from the gas discharge port 27 located higher than the rotating table 22. The ground material circulation system 3 includes: the ground material circulation passage 30 through which the ground materials discharged from the vertical roller mill 2 move from the discharge port 28 of the vertical roller mill 2 to the supply port 26; and the classifier 7 provided at the ground material circulation passage 30 and configured to classify the ground materials and separate the refined powder from the ground materials. The gas circulation system 4 includes: the gas circulation passage 40 through which the gas discharged from the vertical roller mill 2 flows from the gas discharge port 27 of the vertical roller mill 2 to the hot air inlet 29a; the powder collector 41 provided at the gas circulation passage 40 and configured to separate the fine powder from the gas; and the fan 42 configured suck the gas into the gas circulation passage 40.

In the grinding system 1, the ground material circulation system 3 is configured such that: the refined powder is separated from the ground materials discharged from the vertical roller mill 2; and the ground materials from which the refined powder has been separated return to the vertical roller mill 2. Moreover, the gas circulation system 4 is configured such that: the fine powder is separated from the gas discharged from the vertical roller mill 2; and the gas from which the fine powder has been separated returns to the vertical roller mill 2 as the hot air. To be specific, in the grinding system 1, the gas circulation system 4 in which the hot air is circulated to the grinding chamber 20 of the vertical roller mill 2 and the ground material circulation system 3 in which the ground materials are circulated to the grinding chamber 20 and the refined powder as the product is separated from the ground materials are configured as separate routes. Therefore, the flow rate and/or temperature of the hot air which adjusts the temperature of the grinding chamber 20 can be changed without influencing the temperature of the refined powder separated from the ground materials moving in the ground material circulation system 3. Similarly, the temperature of the refined powder separated from the ground materials in the ground material circulation system 3 can be adjusted without influencing the flow rate and/or temperature of the gas (hot air) moving in the gas circulation system 4. To be specific, the temperature of the ground materials ground in the grinding chamber 20 of the vertical roller mill 2 and the temperature of the refined powder as the product can be adjusted independently.

Moreover, in the grinding system 1 according to the above embodiment, the collector 6 configured to collect the refined powder separated from the ground materials is connected to the classifier 7.

With this, the refined powder separated by the classifier 7 can be collected and recovered by the collector 6.

The grinding system 1 according to the above embodiment further includes the fine powder conveyance passage 88 through which the fine powder collected by the powder collector 41 is supplied to the ground material circulation passage 30.

With this, the fine powder collected by the powder collector 41 can be processed in the same manner as the ground materials discharged from the vertical roller mill 2.

The grinding system 1 according to the above embodiment further includes the passage 84 through which the gas is supplied to the classifier 7 from a portion of the gas circulation passage 40 which portion is located downstream of the powder collector 41 in a flow direction of the gas.

With this, the flow rate of the gas discharged from the vertical roller mill 2 to the gas circulation passage 40 and the flow rate of the gas which returns to the vertical roller mill 2 can be balanced.

In the grinding system 1 according to the above embodiment, the classifier 7 includes the cooler 77 configured to supply the cool air into the classifier 7.

With this, the refined powder classified by the classifier 7 can be effectively cooled, and as a result, the product having an easy-to-handle temperature can be obtained.

The foregoing has described a preferred embodiment of the present invention. Modifications of specific structures and/or functional details of the above embodiment are included in the present invention as long as they are within the scope of the present invention. The above configuration can be modified as below, for example.

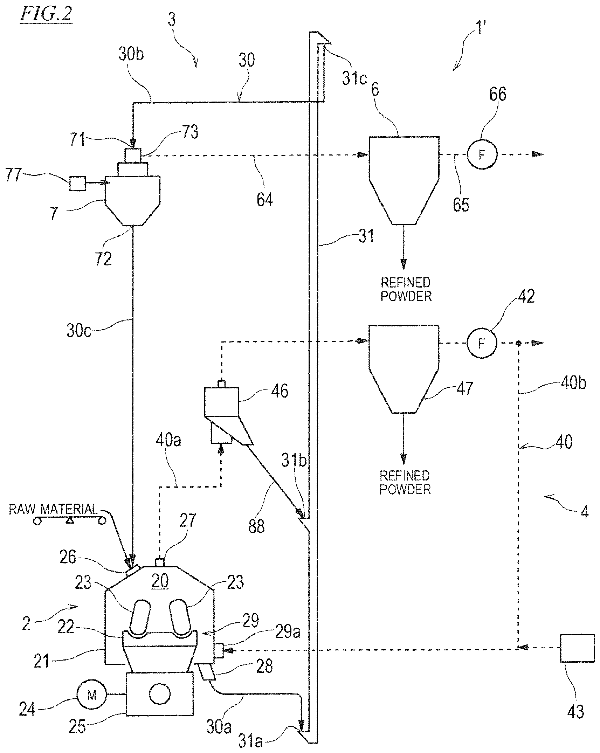

For example, in the grinding system 1 according to the above embodiment, the powder collector 41 is a cyclone powder collector. However, as shown by a grinding system 1' according to Modified Example 1 in FIG. 2, a classifier 46 smaller than the classifier 7 and a collector 47 such as a bag filter may be adopted as the powder collector 41. In this case, the gas discharged from the gas discharge port 27 of the vertical roller mill 2 is classified by the classifier 46, and the fine powder separated from the gas by the classification is supplied through the conveyance passage 88 to the flow of the ground materials of the ground material circulation system 3. Moreover, the refined powder flowing together with the gas discharged from the classifier 46 is collected by the collector 47, and the gas separated from the refined powder by the collector 47 returns to the vertical roller mill 2. The refined powder collected by the collector 47 may be recovered as the product.

### Reference Signs List

- 1: grinding system
- 2: vertical roller mill
- 3: ground material circulation system
- 30: ground material circulation passage
- 4: gas circulation system
- 40: gas circulation passage
- 30a to 30c, 40a and 40b: passage
- 6: collector
- 7: classifier
- 20: grinding chamber
- 21: housing
- 22: rotating table
- 23: grinding roller
- 24: motor
- 25: speed reducer
- 26: supply port
- 27: gas discharge port
- 28: discharge port
- 29: hot air outlet
- 29a: hot air inlet
- 31: bucket elevator
- 31a: first inlet
- 31b: second inlet
- 31c: outlet
- 41: powder collector
- 42: second fan
- 43: hot air supply source
- 46: classifier
- 47: collector
- 65: discharge passage
- 66: first fan
- 71: ground material inlet
- 72: discharge port
- 73: gas discharge port
- 77: cooler
- 85: flow regulating valve
- 88: conveyance passage

## Claims

1. A grinding system (1) comprising:
a vertical roller mill (2) including a rotating table (22), a grinding roller (23), and a housing (21), wherein raw materials are ground by the rotating table (22) and the grinding roller (23) in a grinding chamber (20) formed in the housing (21) while being dried by hot air, ground materials are discharged from a discharge port (28) located lower than the rotating table (22), and gas containing fine powder generated by the grinding is discharged from a gas discharge port (27) located higher than the rotating table (22);
a ground material circulation system (3) including
a ground material circulation passage (30) through which the ground materials discharged from the vertical roller mill move from the discharge port (28) of the vertical roller mill to a supply port (26) and
a classifier (7; 46) provided at the ground material circulation passage and configured to classify the ground materials and separate refined powder from the ground materials; and
a gas circulation system (4) including
a gas circulation passage (40) through which the gas discharged from the vertical roller mill flows from the gas discharge port (27) of the vertical roller mill to a hot air inlet (29a),
a powder collector (41) provided at the gas circulation passage (40) and configured to separate the fine powder from the gas, and said gas circulation system, comprised in the grinding system, being **characterized by** including
a fan (42) configured to suck the gas into the gas circulation passage (40), wherein
the gas circulation system (4) is independent from the ground material circulation system (3).

2. The grinding system according to claim 1, wherein a collector configured to collect the refined powder separated from the ground materials is connected to the classifier.

3. The grinding system according to claim 1 or 2, further comprising a conveyance passage through which the fine powder collected by the powder collector is supplied to the ground material circulation passage.

4. The grinding system according to any one of claims 1 to 3, further comprising a passage through which the gas is supplied to the classifier from a portion of the gas circulation passage which portion is located downstream of the powder collector in a flow direction of the gas.

5. The grinding system according to any one of claims 1 to 4, wherein the classifier includes a cooler configured to supply cool air into the classifier.

## Patentansprüche

1. Mahlsystem (1), das Folgendes umfasst:
eine Vertikalwalzenmühle (2) mit einem Drehtisch (22), einer Mahlwalze (23) und einem Gehäuse (21), wobei Rohmaterialien durch den Drehtisch (22) und die Mahlwalze (23) in einer in dem Gehäuse (21) gebildeten Mahlkammer (20) gemahlen werden, während sie durch Heißluft getrocknet werden, gemahlene Materialien von einer Auslassöffnung (28) ausgegeben werden, die tiefer als der Drehtisch (22) angeordnet ist, und Gas, das durch das Mahlen erzeugtes feines Pulver enthält, von einer Gasauslassöffnung (27) ausgegeben wird, die höher als der Drehtisch (22) angeordnet ist;
ein Mahlgutkreislaufsystem (3) mit
einem Mahlgutkreislaufkanal (30), durch den sich die aus der Vertikalwalzenmühle ausgegebenen gemahlenen Materialien von der Auslassöffnung (28) der Vertikalwalzenmühle zu einer Zufuhröffnung (26) bewegen, und
einem Klassifizierer (7; 46), der an dem Mahlgutkreislaufkanal vorgesehen und so konfiguriert ist, dass er die gemahlenen Materialien klassifiziert und raffiniertes Pulver von den gemahlenen Materialien trennt; und
ein Gaskreislaufsystem (4) mit
einem Gaskreislaufkanal (40), durch den das aus der Vertikalwalzenmühle ausgegebene Gas von der Gasauslassöffnung (27) der Vertikalwalzenmühle zu einem Heißlufteinlass (29a) strömt,
einem Pulversammler (41), der an dem Gaskreislaufkanal (40) vorgesehen und so konfiguriert ist, dass er das feine Pulver von dem Gas trennt, und wobei das in dem Mahlsystem enthaltene Gaskreislaufsystem **dadurch gekennzeichnet ist, dass** es Folgendes umfasst:
ein Gebläse (42), das so konfiguriert ist, dass es das Gas in den Gaskreislaufkanal (40) saugt, wobei
das Gaskreislaufsystem (4) unabhängig von dem Mahlgutkreislaufsystem (3) ist.

2. Mahlsystem nach Anspruch 1, wobei ein Sammler, der zum Sammeln des raffinierten Pulvers, das von den gemahlenen Materialien getrennt wurde, konfiguriert ist, mit dem Klassifizierer verbunden ist.

3. Mahlsystem nach Anspruch 1 oder 2, das ferner einen Förderkanal umfasst, durch den das durch den Pulversammler gesammelte feine Pulver an den Mahlgutkreislaufkanal zugeführt wird.

4. Mahlsystem nach einem der Ansprüche 1 bis 3, ferner umfassend einen Kanal, durch den das Gas von einem Abschnitt des Gaskreislaufkanals an den Klassifizierer zugeführt wird, wobei der Abschnitt in einer Strömungsrichtung des Gases stromabwärts von dem Pulversammler angeordnet ist.

5. Mahlsystem nach einem der Ansprüche 1 bis 4, wobei der Klassifizierer einen Kühler umfasst, der so konfiguriert ist, dass er kühle Luft in den Klassifizierer zuführt.

## Revendications

1. Système de broyage (1) comprenant :
un broyeur à rouleaux vertical (2) comportant une table rotative (22), un rouleau de broyage (23) et une enveloppe (21), des matières premières étant broyées par la table rotative (22) et le rouleau de broyage (23) dans une chambre de broyage (20) formée dans l'enveloppe (21) tout en étant séchées par de l'air chaud, le broyât étant évacué par un orifice de sortie (28) situé plus bas que la table rotative (22), et le gaz contenant des fines générées par le broyage est évacué par un orifice de sortie de gaz (27) situé plus haut que la table rotative (22) ;
un système de circulation de broyat (3) comportant
un passage de circulation de broyat (30) à travers lequel le broyat évacué par le broyeur à rouleaux vertical passe de l'orifice de sortie (28) du broyeur à rouleaux vertical à un orifice d'amenée (26) et
un classificateur (7 ; 46) prévu au niveau du passage de circulation de broyat et conçu pour classer le broyat et séparer la poudre affinée du broyat ; et
un système de circulation de gaz (4) comportant
un passage de circulation de gaz (40) à travers lequel le gaz évacué par le broyeur à rouleaux vertical s'écoule de l'orifice de sortie de gaz (27) du broyeur à rouleaux vertical vers une entrée d'air chaud (29a),
un collecteur de poudre (41) prévu au niveau du passage de circulation de gaz (40) et conçu pour séparer les fines du gaz, et ledit système de circulation de gaz, présent dans le système de broyage, étant **caractérisé en ce qu'**il comporte
une soufflante (42) conçue pour injecter le gaz dans le passage de circulation de gaz (40), étant entendu que
le système de circulation de gaz (4) est indépendant du système de circulation de broyat (3).

2. Système de broyage selon la revendication 1, dans lequel un collecteur conçu pour collecter la poudre affinée séparée du broyat est raccordé au classificateur.

3. Système de broyage selon la revendication 1 ou 2, comprenant en outre un passage de transport à travers lequel les fines collectées par le collecteur de poudre sont fournies au passage de circulation de broyât.

4. Système de broyage selon l'une quelconque des revendications 1 à 3, comprenant en outre un passage à travers lequel le gaz est fourni au classificateur à partir d'une partie du passage de circulation de gaz qui est située en aval du collecteur de poudre dans le sens de l'écoulement du gaz.

5. Système de broyage selon l'une quelconque des revendications 1 à 4, dans lequel le classificateur comporte un refroidisseur conçu pour fournir de l'air frais au classificateur.
